# EUROPÄISCHE PATENTSCHRIFT

(11) **EP 0 593 973 B1**
(45) Veröffentlichungstag und Bekanntmachung des Hinweises auf die Patenterteilung: **10.09.1997**
(21) Anmeldenummer: 93116124.4
(22) Anmeldetag: 06.10.1993
(51) Int. Cl.: B65F 1/08, B65F 1/16

(54) **Geruchsfreie Bio-Mülltonne**
Odourless container for biowaste
Récipient sans odeur pour biodéchets

(30) Priorität: 08.10.1992 DE 9213564 U
(43) Veröffentlichungstag der Anmeldung: 27.04.1994
(73) Patentinhaber: Höhler, Tonio, 58540 Meinerzhagen (DE)
(72) Erfinder: Rizzuti, Marina, DE-51702 Bergneustadt (DE)
(74) Vertreter: Patentanwälte Lippert, Stachow, Schmidt & Partner

(56) Entgegenhaltungen:
- DE-U- 9 001 819
- DE-U- 9 113 447
- DE-U- 9 213 564

## Beschreibung

Die vorliegende Erfindung betrifft eine Mülltonne für Sammelgut, das vor Erwärmung durch direkte Sonneneinstrahlung - vor allem während der Sommerzeit - geschützt ist, sowie für eine Geruchsbelästigung unterbindende und Ungezieferbefall vermeidende Aufnahme organischer Abfälle, bei welcher eine Innentonne mit einem Innendeckel luftdicht und eine Außentonne mit einem über Scharniere beweglich mit der Außentonne verbundenen Außendeckel verschließbar sind, wobei zwischen Innendeckel und Außendeckel ein Hohlraum gebildet ist.

Die derzeit gebräuchlichen Mülltonnen für organischen Abfall stoßen auf Ablehnung, da vor allem in der Sommerzeit die Geruchsbelästigung und die Entwicklung von Ungeziefer in den Tonnen enorm ist.

Aus DE-U-91 13 447 ist eine Mülltonne für den Gebrauch im Haushalt und in der Gastronomie bekannt, die eine Außentonne mit einem Deckel und eine in der Außentonne einhängbare Innentonne aufweist.

Aufgabe der vorliegenden Erfindung ist es daher, eine herkönnliche Bio-Mülltonne, bestehend aus einer Außentonne mit einem Deckel, der über Scharniere beweglich mit der Außentonne verbunden und mit Handgriffen versehen ist, und eventuell mit Aufnahmen für den Tonnengreifer, so zu modifizieren, daß sowohl die Geruchsbelästigung als auch die Bildung von Ungeziefer deutlich verringert wird und eine einfache Handhabung, insbesondere beim maschinellen Entleeren, gewährleistet wird.

Diese Aufgabe wird dadurch gelöst, daß die Innentonne durch eine feste Verbindung unter Bildung eines Hohlraums zur Wärmeisolierung zwischen Außentonne und Innentonne in der Außentonne gehalten ist.

Der Inhalt der Bio-Mülltonne wird durch die isolierende Wirkung des Volumens zwischen Außentonne und Innentonne gut vor Erwärmung durch direkte Sonneneinstrahlung geschützt, und der luftdicht schließende Innendeckel verhindert sowohl den Eintritt von Ungeziefer in die Tonne als auch den Faulgasaustritt.

Die Form der Innentonne ist im Prinzip beliebig und kann an die jeweilige Form der Außentonne angepaßt werden. Es muß lediglich ein sicheres Verschließen der Innentonne gewährleistet sein. Für die feste Verbindung zwischen Außentonne und Innentonne können beliebige, dem Fachmann bekannte Mittel verwendet werden. So können die beiden Tonnen miteinander verschraubt sein, es ist aber von besonderen Vorteil, wenn der gesamte Tonnenkörper aus Außentonne und Innentonne in einer Form gefertigt wird.

In einer vereinfachten Ausführungsform ist die Innentonne mit einem Deckel verschlossen, der mit einem umlaufenden Spannring als Schnellverschluß versehen ist. Diese Ausführungsform hat allerdings den Nachteil, daß der Innendeckel und der Außendeckel der Tone in zwei Arbeitsschritten unabhängig voneinander geöffnet bzw. geschlossen werden müssen, wodurch sowohl das Einfüllen von Abfällen als auch die Entleerung im Vergleich zu einer herkömmlichen Abfalltonne erschwert wird.

Um zusätzlich zur Reduzierung von Geruchs- und Ungezieferbildung eine einfache Handhabung zu gewährleisten, ist in einer bevorzugten Ausführungsform der vorliegenden Neuerung der Deckel der Innentonne mit dem Deckel der Außentonne mechanisch verbunden. Dadurch ist sichergestellt, daß automatisch beim Öffnen des Außendeckels die Innentonne ebenfalls geöffnet wird, wodurch wie bei den herkömmlichen Abfalltonnen ein einfaches Befüllen und Entleeren ermöglicht wird.

Die feste Verbindung zwischen Außen- und Innendeckel kann dadurch bewerkstelligt werden, daß der Außendeckel mit zwei parallel zueinander angeordneten und gegenüberliegenden Führungsnuten, die z. B. durch Anbringen jeweils eines L-Profils auf jeder Seite unterhalb des Deckels zwischen Deckel und waagerechten Teil des L-Profils entstehen, versehen ist, in die zwei Führungsschienen des Innendeckels eingreifen, wobei die Führungsnuten an einem Ende verschlossen und am anderen Ende verschließbar ausgebildet sind. Zur Arretierung des Innendeckels sind die oberen und unteren Begrenzungen der Führungsnuten am offenen Ende jeweils mit einer Bohrung versehen, in die nach Einschiebung des Innendeckels in die Führungsnuten jeweils ein Verschlußbolzen eingesetzt ist.

Der Abstand zwischen den beiden Führungsnuten, die Länge sowie die Höhe der Führungsnuten sind jeweils größer als die entsprechenden Abmessungen der Führungsschienen des Innendeckels, so daß der Innendeckel zwar fest mit dem Außendeckel verbunden, aber dennoch in einem bestimmten Maßbereich beweglich ist. Dadurch können Abmessungsabweichungen aufgrund von Herstellungstoleranzen oder thermischer Ausdehnung ausgeglichen werden, und es wird ein Verkanten des Deckels beim Schließen verhindert. Dieser Bewegungsraum beträgt horizontal 10 - 22 mm und vertikal 5 - 15 mm.

Um eine gute Abdichtung zu gewährleisten, ist die Innentonne unterhalb der Oberkante mit einer umlaufenden Auflagefläche versehen. Der Innendeckel weist eine umlaufende Nut und eine mit der Auflagefläche der Innentonne korrespondierende Gegenfläche auf. Im geschlossenen Zustand der Tonne greift die Oberkante der Innentonne in die umlaufende Nut des Innendeckels ein, und die beiden Flächen der Innentonne und des Innendeckels liegenden aufeinander. Dadurch entstehen drei Dichtbereiche, nämlich zwei zwischen den beiden Flanken der Oberkante der Innentonne und der umlaufenden Nut des Innendeckels und ein dritter zwischen der Auflagefläche der Innentonne und der korrespondierenden Gegenfläche des Innendeckels. Dadurch ist eine sichere Abdichtung gewährleistet.

Der Innendeckel ist zusätzlich auf seiner Oberseite mit 4 - 12, vorzugsweise 6 nach oben vorstehenden Angüssen versehen, die in gleichmäßigen Abständen zueinander entlang des Umfangs des Innendeckels angeordnet sind. Dadurch entsteht ein Zwischenraum zwischen Außendeckel und Innendeckel, der ebenfalls zur Isolation zwischen Außenwand und Innentonne beiträgt.

Beim Herunterdrücken des Deckels wird der Innendeckel über seine Angüsse durch den oberen Deckel festgedrückt. Da die umlaufende Nut des Innendeckels einen konischen Öffnungswinkel aufweist und der Innendeckel beweglich im Außendeckel aufgehängt ist, wird der Innendeckel beim Verschließen automatisch auf die Oberkante der Innentonne zentriert, Beim Öffnen der Innentonne wird der Innendeckel aufgrund der mechanischen Verbindung zwischen Innendeckel und Außendeckel automatisch mitgenommen.

Zusätzlich kann die Isolation zwischen Innentonne und Außentonne zum Beispiel durch einen wärmeisolierenden Schaum, der den Hohlraum zwischen Außentonne und Innentonne ausfüllt, oder durch Einsetzen eines Rings im oberen Bereich der Tonne, der diesen Raum nach oben abdichtet, verbessert werden.

Die vorliegende Erfindung wird nun anhand der Figuren näher beschrieben:
- Figur 1: zeigt die vereinfachte Ausführungsform der Bio-Mülltonne im Längsschnitt von der Seite.
- Figur 2: zeigt die Biotonne aus Fig. 1 im Querschnitt von oben veranschaulicht.
- Figur 3: zeigt die bevorzugte Ausführungsform der Bio-Mülltonne im Längsschnitt von der Seite dargestellt.
- Figur 4: zeigt die bevorzugte Ausführungsform der Bio-Mülltonne mit Querschnitt von oben.
- Figur 5: zeigt eine Ausschnittsvergrößerung des Bereichs Y in Fig. 3.
- Figur 6: zeigt einen Querschnitt entlang der Linie X in Fig. 4 in einer Ausschnittsvergrößerung.

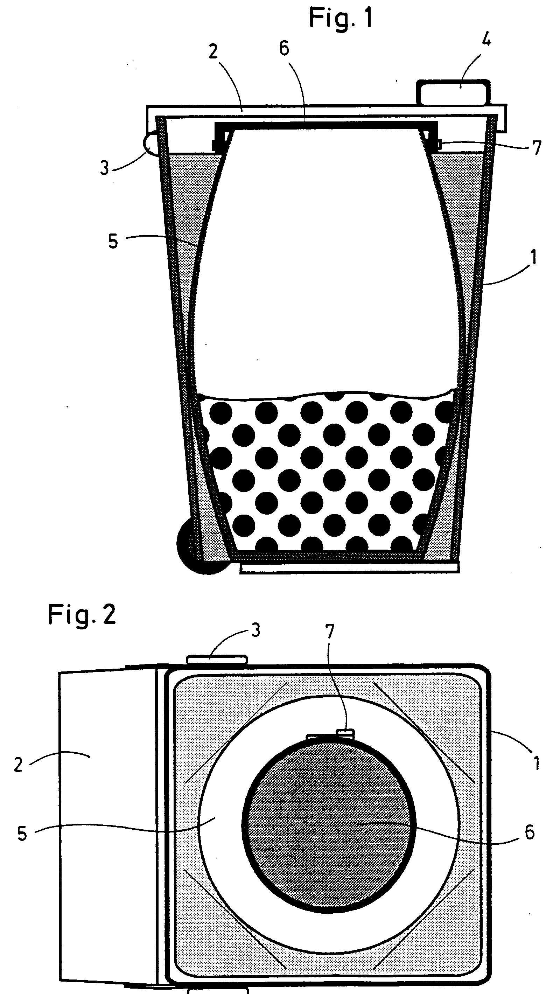

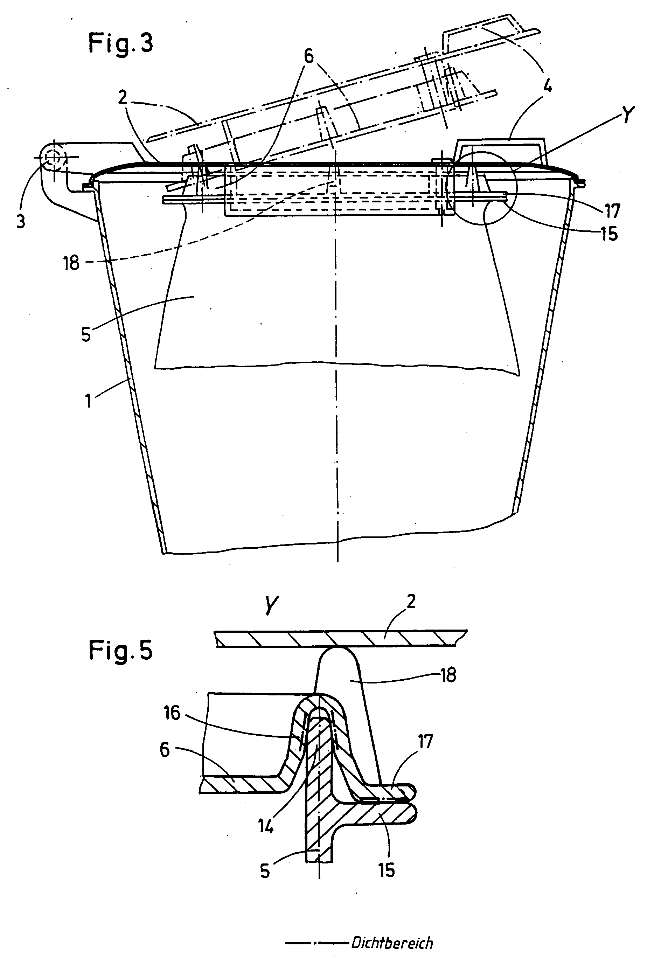

Die Fig. 1 und 2 zeigen die vereinfachte Ausführungsform der Bio-Mülltonne im Längsschnitt von der Seite bzw. im Querschnitt von oben. Im Falle der Fig. 3 ist dabei der Außendeckel 2 geöffnet.

In den Figuren wird die Außentonne mit 1, der Außendeckel mit 2, die Scharniere mit 3, der Handgriff mit 4, die Innentonne mit 5, der Innendeckel mit 6 und der Spannring mit 7 bezeichnet.

In Fig. 3 ist die bevorzugte Ausführungsform der Bio-Mülltonne im geschlossenen Zustand bzw. als Phantombild im geöffneten Zustand im Längsschnitt von der Seite dargestellt. Hieraus ist ersichtlich, daß der Innendeckel 6 mit dem Außendeckel 2 mechanisch verbunden ist und automatisch zusammen mit dem Außendeckel 2 geöffnet und verschlossen wird.

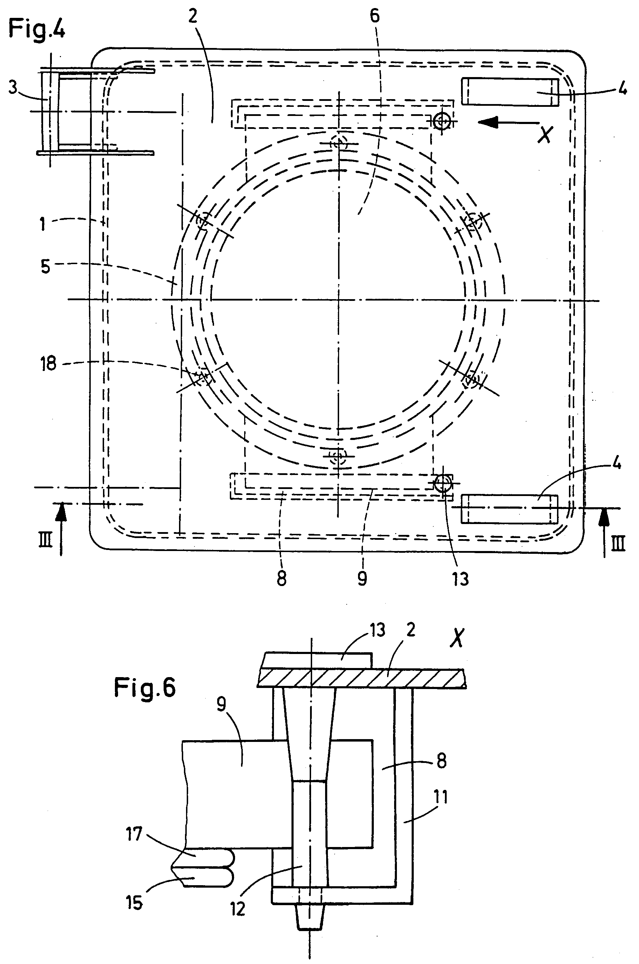

Die Aufhängung des Innendeckels im Außendeckel ist besonders gut in den Fig. 4 und 6 zu erkennen. Der Außendeckel 2 weist zwei gegenüberliegende, parallel zueinander angeordnete L-Profile 11 auf, so daß zwischen dem Außendeckel und dem waagerechten Teil der L-Profile 11 jeweils zwei Führungsnuten 8 entstehen, die an einem Ende geschlossen sind. In diese Führungsnuten 8 können zwei Führungsschienen 9 des Innendeckels 2 eingeschoben werden. Zur Fixierung des Innendeckels 6 wird ein Arretierungsbolzen 13 durch die Bohrung 12, die sich jeweils durch den Außendeckel 2 und den waagerechten Teil jedes L-Profils 11 erstreckt, eingesteckt. Wie aus Fig. 6 erkenntlich, ist dabei der Bolzen konisch ausbildet.

Wie aus Fig. 4 ersichtlich, ist der Abstand zwischen den beiden Führungsnuten 8 sowie die Länge und die Höhe der Führungsnuten 8 jeweils größer als die entsprechenden Abmessungen der Führungsschienen 9 des Innendeckels 6. Dies bewirkt, daß der Innendeckel 6, obwohl er fest mit dem Außendeckel 2 verbunden ist, in einem bestimmten Maßbereich beweglich ist.

In Fig. 5 ist die Abdichtung zwischen Innentonne 5 und Innendeckel 6 besonders gut zu erkennen. Die Innentonne 5 weist hierzu unterhalb ihrer Oberkante 14 eine umlaufende Auflagefläche 15 auf. Der Innendeckel 6 ist entsprechend mit einer umlaufenden Nut 16 und einer zu der Auflage 15 korrespondierenden Gegenfläche 17 versehen. Im geschlossenen Zustand greift die Oberkante 14 in die umlaufende Nut 15 des Innendeckel 6 ein und die Auflagefläche 14 ist in Kontakt mit der korrespondierenden Gegenfläche 17 des Innendeckels 6. Hierdurch wird eine Abdichtung entlang der äußeren Flanken der Oberkante 14 der Innentonne und zwischen den korrespondierenden Flächen 15 und 17 erreicht.

Wie besonders gut aus Fig. 4 zu erkennen ist, ist der Innendeckel 6 auf seiner Oberseite in der bevorzugten Ausführungsform mit 6 nach oben vorstehenden Angüssen 18 versehen, die in gleichmäßigen Abständen zueinander entlang des Umfangs des Innendeckels 6 angeordnet sind.

Wie aus Fig. 3 ersichtlich, drückt beim Verschließen der Tonne der Außendeckel 2 auf die Angüsse 18 des Innendeckels 6, wodurch der Innendeckel 6 fest gegen die Oberkante 14 und die Auflagefläche 15 der Innentonne gepreßt wird. Da die Umlaufende Nut 16 des Innendeckels 6, die in Fig. 5 zu sehen, eine konische Öffnung aufweist und der Innendeckel 6, wie bereits beschrieben, in gewissem Umfang beweglich im Außendeckel 2 aufgehängt ist, wird beim zudrücken des Außendeckels 2 der Innendeckel 6 automatisch auf die Oberkante 14 der Innentonne 5 zentriert.

## Patentansprüche

1. Mülltonne für Sammelgut, das vor Erwärmung durch direkte Sonneneinstrahlung - vor allem während der Sommerzeit - geschützt ist, sowie für eine Geruchsbelästigung unterbindende und Ungezieferbefall vermeidende Aufnahme organischer Abfälle, bei welcher eine Innentonne (5) mit einem Innendeckel (6) luftdicht (14-17) und eine Außentonne (1) mit einem über Scharniere (3) beweglich mit der Außentonne (1) verbundenen Außendeckel (2) verschließbar sind, wobei zwischen Innendeckel (6) und Außendeckel (2) ein Hohlraum gebildet ist, **dadurch gekennzeichnet**, daß die Innentonne (5) durch eine feste Verbindung unter Bildung eines Hohlraums zur Wärmeisolierung zwischen Außentonne (1) und Innentonne (5) in der Außentonne (1) gehalten ist.

2. Biomülltonne nach Anspruch 1,
**dadurch gekennzeichnet,**
daß der Deckel (6) der Innentonne (5) mit einem umlaufenden Spannring (7) als Schnellverschluß versehen ist.

3. Biomülltonne nach Anspruch 1,
**dadurch gekennzeichnet,**
daß der Deckel (6) der Innentonne (5) mit dem Deckel (2) der Außentonne (1) mechanisch verbunden ist.

4. Biomülltonne nach Anspruch 3,
**dadurch gekennzeichnet,**
daß der Außendeckel (2) mit zwei parallel zueinander angeordneten und gegenüberliegenden Führungsnuten (8) versehen ist, in die zwei Führungsschienen (9) des Innendeckels (6) eingreifen, wobei die Führungsnuten (8) an einem Ende verschlossen sind und am anderen Ende verschließbar ausgebildet sind.

5. Biomülltonne nach Anspruch 4,
**dadurch gekennzeichnet,**
daß die Führungsnuten (8) durch Anbringen eine L-Profils (11) an der Unterseite des Außendeckels (2) zwischen der Unterseite des Außendeckels und dem waagerechten Teil des L-Profils (11) ausgebildet werden und sowohl die L-Profile (11) als auch der Außendeckel (2) an dem offenen Ende jeweils mit einer Bohrung (12) versehen sind, in die nach Einschieben des Innendeckels (6) in die Führungsnuten (8) jeweils ein Bolzen (13) zur Arretierung des Innendeckels (6) einsetzbar ist.

6. Biomülltonne nach Anspruch 5,
**dadurch gekennzeichnet,**
daß der Abstand zwischen den beiden Führungsnuten (8) die Länge sowie die Höhe der Führungsnuten (8) jeweils größer sind als die entsprechenden Abmessungen der Führungsschienen (9) des Innendeckels (6), so daß der Innendeckel (6) zwar fest mit dem Außendeckel (2) verbunden aber dennoch in einem bestimmten Maßbereich beweglich ist.

7. Biomülltonne nach Anspruch 6,
**dadurch gekennzeichnet,**
daß die Innentonne (5) unterhalb der Oberkante (14) mit einem umlaufenden Auflagefläche (15) versehen ist und der Innendeckel (6) eine umlaufende Nut (16), in die die Oberkante (14) der Innentonne (5) eingreift, und eine mit der Auflagefläche (15) korrespondierenden Gegenfläche (17) aufweist.

8. Biomülltonne nach Anspruch 7,
**dadurch gekennzeichnet,**
daß der Innendeckel (6) auf seiner Oberseite mit 4 - 12 nach oben vorstehenden Angüssen (18) versehen ist, die in gleichmäßigen Abständen zueinander entlang des Umfangs des Deckels (6) angeordnet sind.

9. Biomülltonne nach einem der Ansprüche 1 bis 8,
**dadurch gekennzeichnet,**
daß der Hohlraum zwischen Außentonne (1) und Innentonne (6) mit einem wärmeisolierenden Schaum ausgefüllt ist.

10. Biomülltonne nach einem der Ansprüche 1 bis 8,
**dadurch gekennzeichnet,**
daß zwischen Außentonne (1) und Innentonne (6) im oberen Bereich ein Ring eingesetzt ist, der den Hohlraum zwischen Innentonne (6) und Außentonne (1) nach oben abdichtet.

## Claims

1. Container for waste material, which container is protected against being heated by direct solar radiation, especially during summertime, and for storing organic waste in a manner obviating odour nuisance and avoiding pest infestation, in which an inner container (5) is arranged to be closed in an air-tight manner (14-17) by means of an inner lid (6) and an outer container (1) is arranged to be closed by means of an outer lid (2) movably joined by hinges (3) to the outer container (1), wherein a cavity is formed between inner lid (6) and outer lid (2), **characterised in that** the inner container (5) is held in the outer container (1) by a fixed connection to form a cavity for heat insulation between the outer container (1) and the inner container (5).

2. Container for biowaste according to claim 1, **characterised in that** the lid (6) of the inner container (5) is provided with a circumferential clamping ring (7) as quick-release closure.

3. Container for biowaste according to claim 1, **characterised in that** the lid (6) of the inner container (5) is mechanically connected to the lid (2) of the outer container (1).

4. Container for biowaste according to claim 3, **characterised in that** the outer lid (2) is provided with two guide channels (8) arranged parallel and opposite one another, in which two guide rails (9) of the inner lid (6) engage, the guide channels (8) being closed at one end and being constructed to be closable at the other end.

5. Container for biowaste according to claim 4, **characterised in that**, by mounting an L-section member (11) on the underside of the outer lid (2), the guide channels (8) are formed between the underside of the outer lid and the horizontal portion of the L-section member (11), and each of the L-section members (11) and the outer lid (2) is provided at the open end with a bore (12) into which a respective pin (13) is insertable to lock the inner lid (6) after the inner lid (6) has been inserted in the guide channels (8).

6. Container for biowaste according to claim 5, **characterised in that** the distance between the two guide channels (8), the length and the height of the guide channels (8) are each greater than the corresponding dimensions of the guide rails (9) of the inner lid (6), so that although the inner lid (6) is fixedly connected to the outer lid (2) it is nevertheless movable within a specific dimensional range.

7. Container for biowaste according to claim 6, **characterised in that** the inner container (5) is provided below its upper edge (14) with a circumferential bearing surface (15), and the inner lid (6) has a circumferential groove (16), in which the upper edge (14) of the inner container (5) engages, and a counter-surface (17) corresponding to the bearing surface (15).

8. Container for biowaste according to claim 7, **characterised in that** the inner lid (6) is provided on its upper side with 4-12 upwardly projecting mouldings (18) which are arranged at uniform intervals with respect to one another around the circumference of the lid (6).

9. Container for biowaste according to any one of claims 1 to 8, **characterised in that** the cavity between outer container (1) and inner container (5) is filled with a heat-insulating foam.

10. Container for biowaste according to any one of claims 1 to 8, **characterised in that** a ring is inserted in the upper region between outer container (1) and inner container (5), which ring seals at the top the cavity between the inner container (5) and outer container (1).

## Revendications

1. Poubelle pour des matériaux ramassés qui sont protégés contre un échauffement par rayonnement solaire direct, avant tout pendant la période estivale, ainsi que pour une réception de déchets organiques, inhibant toute nuisance olfactive et évitant toute infection par des insectes, poubelle dans laquelle un récipient intérieur (5) peut être fermé hermétiquement (14 à 17) à l'aide d'un couvercle intérieur (6) et un récipient extérieur (1) peut être fermé à l'aide d'un couvercle extérieur (2) relié en étant mobile, par l'intermédiaire de charnières (3), au récipient extérieur (1), un vide étant alors formé entre le couvercle intérieur (6) et le couvercle extérieur (2), caractérisée en ce que le récipient intérieur (5) est maintenu dans le récipient extérieur (1) par une liaison rigide, avec formation d'un vide d'isolation thermique entre le récipient extérieur (1) et le récipient intérieur (5).

2. Poubelle pour biodéchets selon la revendication 1,
caractérisée en ce que
le couvercle (6) du récipient intérieur (5) est pourvu d'un collier de serrage périphérique (7) en tant qu'organe de fermeture rapide.

3. Poubelle pour biodéchets selon la revendication 1,
caractérisée en ce que
le couvercle (6) du récipient intérieur (5) est relié mécaniquement au couvercle (2) du récipient extérieur (1).

4. Poubelle pour biodéchets selon la revendication 3,
caractérisée en ce que
le couvercle extérieur (2) est pourvu de deux rainures de guidage (8) disposées parallèlement l'une à l'autre et situées dans des positions mutuellement opposées, dans lesquelles s'engagent deux rails de guidage (9) du couvercle intérieur (6), les rainures de guidage (8) étant obturées à une extrémité et étant dotées d'une possibilité d'obturation à l'autre extrémité.

5. Poubelle pour biodéchets selon la revendication 4,
caractérisée en ce que
les rainures de guidage (8) sont formées, par mise en place d'un profilé en L (11) sur la face inférieure du couvercle extérieur (2), entre la face inférieure du couvercle extérieur et la partie horizontale du profilé en L (11), et les profilés en L (11) aussi bien que le couvercle extérieur (2) sont pourvus chacun, à l'extrémité ouverte des rainures, d'une forure (12) dans laquelle, après l'introduction du couvercle intérieur (6) dans les rainures de guidage (8), une goupille respective (13) peut être insérée pour bloquer le couvercle intérieur (6).

6. Poubelle pour biodéchets selon la revendication 5,
caractérisée en ce que
la distance entre les deux rainures de guidage (8), la longueur ainsi que la hauteur des rainures de guidage (8) sont plus grandes respectivement que les dimensions correspondantes des rails de guidage (9) du couvercle intérieur (6), afin que le couvercle intérieur (6), tout en étant relié fermement au couvercle extérieur (2), soit cependant mobile dans une mesure déterminée.

7. Poubelle pour biodéchets selon la revendication 6,
caractérisée en ce que
le récipient intérieur (5) est pourvu, au-dessous de son bord supérieur (14), d'une surface d'appui périphérique (15) et le couvercle intérieur (6) présente une rainure périphérique (16), dans laquelle le bord supérieur (14) du récipient intérieur (5) s'engage, et une contre-surface (17) correspondant à la surface d'appui (15).

8. Poubelle pour biodéchets selon la revendication 7,
caractérisée en ce que
le couvercle intérieur (6) est pourvu, sur sa face supérieure, de 4 à 12 cônes de moulage (18) faisant saillie vers le haut, qui sont disposés à intervalles réguliers l'un de l'autre le long du pourtour du couvercle (6).

9. Poubelle pour biodéchets selon l'une des revendications 1 à 8,
caractérisée en ce que
le vide entre le récipient extérieur (1) et le récipient intérieur (5) est rempli d'une mousse thermiquement isolante.

10. Poubelle pour biodéchets selon l'une des revendications 1 à 8,
caractérisée en ce que,
entre le récipient extérieur (1) et le récipient intérieur (5), est inséré en partie haute un anneau, qui ferme en haut de façon étanche le vide entre le récipient intérieur (5) et le récipient extérieur (1).
